# EUROPEAN PATENT SPECIFICATION

(11) **EP 3 122 827 B1**
(45) Date of publication and mention of the grant of the patent: **10.01.2018**
(21) Application number: 15712164.1
(22) Date of filing: 26.03.2015
(51) Int. Cl.: C09D 167/08, C09D 7/12

(54) **COATING OF A SURFACE.**
OBERFLÀCHENBESCHICHTUNG
REVÊTEMENT D'UNE SURFACE

(30) Priority: 27.03.2014 GB 201405491
(43) Date of publication of application: 01.02.2017
(73) Proprietor: DuPont Nutrition Biosciences ApS, 1411 Copenhagen K (DK)
(72) Inventor: HENTZE, Hans-Peter, 8230 Åbyhøj (DK); NIELSEN, Bjarne, 8600 Silkeborg (DK)
(74) Representative: DuPont EMEA
(86) International application number: PCT/EP2015/056634
(87) International publication number: WO 2015/144846

(56) References cited:
- US-A1- 2009 118 397

## Description

### FIELD OF THE INVENTION

The present invention relates to a dispersion and a coating composition formed here from where the coating composition shows anti-fogging and/or anti-static effects when coated on a polymer surface.

### BACKGROUND OF THE INVENTION

For a multiplicity of purposes plastic surfaces are often modified using anti-fogging and/or anti-static agents. The use hereof is to prevent the formation of small water droplets on the surface of the plastics (anti-fogging) or to reduce or eliminate buildup of static electricity generally caused by the triboelectric effect (anti-static).

Anti-static and anti-fogging agents work by a similar mechanism. In both applications they need to be on the surface of the polymer and interact with ambient moisture/condensed water. Furthermore, for the products to work well they need to comprise both a polar and a non-polar part, where the polar part interacts with the water and the non-polar part interacts with the surface of the plastic.

A good anti-static property is important for example in a variety of different food packaging applications. Especially, those involving packaging of powdered products where the adherence of product to the film surface could create severe problems with heat sealing bags. Product contamination of the heat seal area can be a major issue on a production and packaging line. The prevention of dust attraction is essential in many applications where the final packaged product should be clean and appealing when presented to consumers. A good anti-static agent will prevent attraction of dust and other fine particles to the polymer surface.

The role of the anti-fogging agent is to prevent condensation of water vapour as small discrete water droplets on the polymer surface. The anti-fogging agent acts as a wetting agent resulting in reduced surface tension at the water/polymer interface. The water will condense as a thin continuous film with no loss of transparency, rather than as small discrete water droplets rendering a less attractive presentation of the packaging and the packaged content itself.

The anti-fogging and anti-static agents can be integrated into the plastic as an internal additive mixed initially with the polymer before forming and shaping the plastic. In this manner, the internal additive would be migratory in order to be able to show any anti-fogging or anti-static effect. Thus, the anti-fogging or anti-static agents are to migrate from inside the plastic towards the surface, where they are to exert their effect. Alternatively, the anti-fogging or anti-static agents can be added as a coating where the agents do not need to be able to migrate within the plastic. Whether the anti-fogging or anti-static agents are added as an internal additive or as a coating is dependent upon the agent as well as the type of polymer.

Glycerides (monoglycerol esters) and polyglycerides (polyglycerol esters) are widely used as migratory additives in polymers, especially polyolefins. They are highly desired especially for sensitive applications, like food packaging, as they combine the required functionalities of polymer additives with the sustainability and product safety profile of a bio-based, renewable and food-grade material (R. Höfer, Processing and Performance Additives for PlasticsPolymer Science: A Comprehensive Reference, Volume 10 (2012)).

In some applications, the use of glycerides and polyglycerides as internal, migratory additives are limited by their interaction and reactivity with the polymer itself like hydrogen bonding or transesterification. This is for example the case for their use as additives in polyesters, like polyethylene terephthalete (PET). Thus, they are not migratory in polyesters and therefore need to be applied as a coating on top of the surface.

JP10-139906 describes the use of a polyglycerol fatty acid ester as an anti-fogging agent. The polyglycerol fatty acid ester is comprised in a coating which can be provided on various polymers such as polystyrene, polyester, polypropylene and vinyl chloride to improve the anti-fogging properties of the plastic sheet formed. However, glycerides and polyglycerides with suitable polymer additive functionalities are often not self-dispersing or soluble in water, they precipitate from aqueous dispersions, or form highly viscous solutions already at low concentrations Thus, it is difficult to obtain an applicable solution with a total solid content sufficiently high for cost effective transportation and with a viscosity low enough for handling (e.g. pumpability).

US 2009/118397 A1 describes an aqueous coating composition comprising one or more film-forming latex polymers and a reactive surfactant, forming a dry film that is claimed to be more durable and water-resistant than traditional latex paint composition. However, this document neither discloses nor suggests a dispersion for coating a polymer surface comprising polyglycerol esters and a surfactant being neutralized or partially neutralised fatty acid or a neutralised or partially neutralised ester of fatty acids, in which the coating composition shows anti-fogging and/or anti-static effects when coated on a polymer surface.

### OBJECT OF THE INVENTION

It is the object of the present invention to provide a dispersion with a high solid content but a low viscosity.

It is a further object of the present invention to provide a dispersion with a high solid content and increased stability.

### DETAILED DESCRIPTION

This object is solved by a dispersion for coating a polymer surface comprising polyglycerol esters and a surfactant being a neutralized or partially neutralised fatty acid or a neutralized or partially neutralized ester of fatty acids.

Addition of the surfactant increases the dispersion stability and enables low viscosity polyglyceride dispersions. In this way, the coating formulation becomes stable against precipitation as well as processable (e.g. pumpable) at technologically relevant solid concentrations demanded for production, transportation and storage of the dispersion.

In one embodiment, the viscosity range is from 0.005-10 Pa·s at 25°C for the dispersion when measured at shear rate of 100/s.

In one embodiment, the polyglycerol esters can be formed by esterification of the polyglycerol units by carboxylic acids like fatty acids.

It is implicitly to be understood that both saturated and unsaturated fatty acids can be used as part of the polyglycerol esters. Furthermore, a mixture of saturated and unsaturated fatty acids can be used in the formation of the polyglycerol esters.

Examples of polyglycerol esters are GRINDSTED® PGE 308, tetraglycerol monocaprate, GRINDSTED® PGE 909, tetraglycerol monomyristate, triglycerol monocaprate, diglycerol monocaprylate, triglycerol monocaprate.

Neutralized or partially neutralized fatty acids are to be understood as fatty acids which are salts of monocarboxylic acids or salts of carboxylic acid esters with two or more carboxylic acid groups.

Neutralized or partially neutralized fatty acid esters are to be understood as fatty acid esters which are salts of monocarboxylic acids or salts of carboxylic acid esters with two or more carboxylic acid groups.

In one embodiment, the neutralized or partially neutralized fatty acids or the neutralized or partially neutralized fatty acid esters comprises a sodium salt, a potassium salt, a calcium salt, a zinc salt, or a magnesium salt or a mixture hereof. However, other cations can be considered as well.

In a further embodiment, the neutralized or partially neutralized fatty acids or the neutralized or partially neutralized fatty acid esters comprise a sodium salt, a potassium salt and/or a calcium salt.

Examples of combinations of polyglycerol esters and neutralized or partially neutralized fatty acids or neutralized or partially neutralized fatty acid esters are for example GRINDSTED® PGE 308 and sodium stearate, tetraglycerol monocaprate and sodium stearate, GRINDSTED® PGE 909 and sodium stearate, tetraglycerol monomyristate and sodium stearate, triglycerol monocaprate and sodium stearate, diglycerol monocaprylate and sodium stearate, triglycerol monocaprate and sodium stearate, GRINDSTED® PGE 308 and sodium stearate, GRINDSTED® PGE 308 and sodium stearoyl lactylate.

A dispersion comprises particles being dispersed in a continuous phase. As described herein all the particles constitute the total solid content of the dispersion. Solid content is to be understood as the amount of material of the dispersion with a viscosity higher than water. In one embodiment the solid content is to be understood as the non-aqueous material of the dispersion.

In a further embodiment, the solid content is 10-70 wt% of the dispersion. In a still further embodiment, the solid content is 15-65 wt% of the dispersion. In a still further embodiment, the solid content is 20-90 wt% of the dispersion. In a still further embodiment, the solid content is 20-70 wt% of the dispersion. In a still further embodiment, the solid content is 20-60 wt% of the dispersion. In a still further embodiment, the solid content is 20-55 wt% of the dispersion. In a still further embodiment, the solid content is 20-50 wt% of the dispersion. In a still further embodiment, the solid content is 20-45 wt% of the dispersion. In a still further embodiment, the solid content is 20-40 wt% of the dispersion.

In a still further embodiment, the solid content is 25-70 wt% of the dispersion. In a still further embodiment, the solid content is 25-60 wt% of the dispersion. In a still further embodiment, the solid content is 25-55 wt% of the dispersion. In a still further embodiment, the solid content is 25-50 wt% of the dispersion. In a still further embodiment, the solid content is 25-45 wt% of the dispersion. In a still further embodiment, the solid content is 25-40 wt% of the dispersion.

In a still further embodiment, the solid content is 30-70 wt% of the dispersion. In a still further embodiment, the solid content is 30-60 wt% of the dispersion. In a still further embodiment, the solid content is 30-55 wt% of the dispersion. In a still further embodiment, the solid content is 30-50 wt% of the dispersion. In a still further embodiment, the solid content is 30-45 wt% of the dispersion. In a still further embodiment, the solid content is 30-40 wt% of the dispersion.

In a further embodiment, the solid content is above 10 wt% of the dispersion. In a still further embodiment, the solid content is above 15 wt% of the dispersion. In a still further embodiment, the solid content is above 20 wt% of the dispersion. In a still further embodiment, the solid content is above 25 wt% of the dispersion. In a still further embodiment, the solid content is above 30 wt% of the dispersion.

In a further embodiment, the solid content is equal to or above 10 wt% of the dispersion. In a still further embodiment, the solid content is equal to or above 15 wt% of the dispersion. In a still further embodiment, the solid content is equal to or above 20 wt% of the dispersion. In a still further embodiment, the solid content is equal to or above 25 wt% of the dispersion. In a still further embodiment, the solid content is equal to or above 30 wt% of the dispersion.

In one embodiment, the concentration of said polyglycerol esters is above 10 wt% of the total solid content. In a further embodiment, the concentration of said polyglycerol esters is above 15 wt% of the total solid content. In a still further embodiment, the concentration of said polyglycerol esters is above 20 wt% of the total solid content. In a still further embodiment, the concentration of said polyglycerol esters is above 25 wt% of the total solid content. In a still further embodiment, the concentration of said polyglycerol esters is above 30 wt% of the total solid content.

In a further embodiment, the concentration of said polyglycerol esters is between 10-60 wt% of the total solid content. In a still further embodiment, the concentration of said polyglycerol esters is between 15-55 wt% of the total solid content. In a still further embodiment, the concentration of said polyglycerol esters is between 20-50 wt% of the total solid content. In a still further embodiment, the concentration of said polyglycerol esters is between 25-45 wt% of the total solid content. In a still further embodiment, the concentration of said polyglycerol esters is between 10-30 wt% of the total solid content.

This high content of polyglycerol esters in the dispersion normally results in the precipitation of the polyglycerol esters from the dispersion. However, having added a surfactant in the shape of a neutralized or partially neutralized fatty acid or a partially neutralized or neutralized fatty acid ester enables the dispersion to be stable and prevent precipitation of the solid content.

In a further embodiment, the concentration of said surfactant is 0.1-50 wt% of the total solid content. In a still further embodiment, the concentration of said surfactant is 0.5-40 wt%. In a still further embodiment, the concentration of said surfactant is 1-30 wt%. In a still further embodiment, the concentration of said surfactant is 1-20 wt%. In a still further embodiment, the concentration of said surfactant is 1-10 wt%. Using this concentration of the surfactant enables the overall dispersion to remain stable and show a low viscosity.

In a further embodiment, the total solid content comprises a mixture of 90-95 wt% glycerides and polyglycerides and 5-10 wt% neutralized fatty acid esters.

In a further embodiment, the fatty acids of said surfactant is one or more of lactic acid, citric acid, stearic acid, tartaric acid or a mixture of one or more hereof.

In one embodiment, the fatty acids of said surfactant are C2-C24. These chain lengths are particularly advantageous in combination with food or foodstuff since they are all edible fatty acids.

Alternatively, the fatty acids can be one or more of myristic acid, palmitic acid, oleic acid, ricinoleic acid, dihydroxystearic acid, behenic acid, luric acid, capric acid, caprylic acid and caproic acid.

It is to be understood that the mentioned fatty acids are the neutralized or partially neutralized fatty acids or the fatty acid of the neutralized or partially neutralized fatty acid ester.

It is furthermore to be understood that the surfactant can be one neutralized or partially neutralized fatty acid or one neutralized or partially neutralized fatty acid ester alone, a mixture of two, three, four, five or more different neutralized or partially neutralized fatty acids or a mixture of two, three, four, five or more different neutralized or partially neutralized fatty acid esters.

Alternatively, the surfactant can be a combination of one or more neutralized or partially neutralized fatty acids and one or more neutralized or partially neutralized fatty acid esters. Thus, the surfactant can be a combination of for example one neutralized or partially neutralized fatty acid and one neutralized or partially neutralized fatty acid ester, a combination of for example one neutralized or partially neutralized fatty acid and two neutralized or partially neutralized fatty acid esters, a combination of for example one neutralized or partially neutralized fatty acid and three neutralized or partially neutralized fatty acid esters, a combination of for example two neutralized or partially neutralized fatty acids and one neutralized or partially neutralized fatty acid ester, a combination of two neutralized or partially neutralized fatty acids and two neutralized or partially neutralized fatty acid esters, a combination of two neutralized or partially neutralized fatty acids and three neutralized or partially neutralized fatty acid esters, a combination of three neutralized or partially neutralized fatty acids and one neutralized or partially neutralized fatty acid ester, a combination of three neutralized or partially neutralized fatty acids and two neutralized or partially neutralized fatty acid esters, a combination of three neutralized or partially neutralized fatty acids and three neutralized or partially neutralized fatty acid esters and so forth.

In a further embodiment, the surfactant is sodium stearoyl lactylate (SSL).

Alternatively, the surfactant can be one or more neutralized or partially neutralized fatty acid esters or neutralized or partially neutralized fatty acids, such as diacetyl tartaric acid ester of mono- and diglycerides (DATEM), like PANODAN® AB 100 (made from edible refined sunflower and palm oil), citric acid ester of mono- and diglycerides (CITREM), like GRINDSTED® CITREM N12 (made from edible, fully hydrogenated palm based oil) or sodium stearate,.

In one embodiment, the viscosity of the dispersion at a temperature of 20°C and a shear rate of 10/s is 0.01-100 Pa s. In a further embodiment, the viscosity of the dispersion at a temperature of 20°C and a shear rate of 10/s is 0.05-50 Pa s. In a still further embodiment, the viscosity of the dispersion at a temperature of 20°C and a shear rate of 10/s is 0.1-10 Pa s. In a still further embodiment, the viscosity of the dispersion at a temperature of 20°C and a shear rate of 10/s is 1-7 Pa s.

In one embodiment, the viscosity of the dispersion at a temperature of 20°C and a shear rate of 10/s is 0.01-100 Pa s and the solid content of the dispersion is 10-70 wt%. In a still further embodiment, the viscosity of the dispersion at a temperature of 20°C and a shear rate of 10/s is 0.1-10 Pa s and the solid content of the dispersion is 10-70 wt%. In a still further embodiment, the viscosity of the dispersion at a temperature of 20°C and a shear rate of 10/s is 1-7 Pa s and the solid content of the dispersion is 10-70 wt%.

In one embodiment, the viscosity of the dispersion at a temperature of 20°C and a shear rate of 10/s is 0.01-100 Pa s and the solid content of the dispersion is 20-70 wt%. In a still further embodiment, the viscosity of the dispersion at a temperature of 20°C and a shear rate of 10/s is 0.1-10 Pa s and the solid content of the dispersion is 20-70 wt%. In a still further embodiment, the viscosity of the dispersion at a temperature of 20°C and a shear rate of 10/s is 1-7 Pa s and the solid content of the dispersion is 20-70 wt%.

In one embodiment, the viscosity of the dispersion at a temperature of 20°C and a shear rate of 10/s is 0.01-100 Pa s and the solid content of the dispersion is 20-60 wt%. In a still further embodiment, the viscosity of the dispersion at a temperature of 20°C and a shear rate of 10/s is 0.1-10 Pa s and the solid content of the dispersion is 20-60 wt%. In a still further embodiment, the viscosity of the dispersion at a temperature of 20°C and a shear rate of 10/s is 1-7 Pa s and the solid content of the dispersion is 20-60 wt%.

In one embodiment, the viscosity of the dispersion at a temperature of 20°C and a shear rate of 10/s is 0.01-100 Pa s and the solid content of the dispersion is 20-50 wt%. In a still further embodiment, the viscosity of the dispersion at a temperature of 20°C and a shear rate of 10/s is 0.1-10 Pa s and the solid content of the dispersion is 20-50 wt%. In a still further embodiment, the viscosity of the dispersion at a temperature of 20°C and a shear rate of 10/s is 1-7 Pa s and the solid content of the dispersion is 20-50 wt%.

In one embodiment, the viscosity of the dispersion at a temperature of 20°C and a shear rate of 10/s is 0.01-100 Pa s and the solid content of the dispersion is 20-40 wt%. In a still further embodiment, the viscosity of the dispersion at a temperature of 20°C and a shear rate of 10/s is 0.1-10 Pa s and the solid content of the dispersion is 20-40 wt%. In a still further embodiment, the viscosity of the dispersion at a temperature of 20°C and a shear rate of 10/s is 1-7 Pa s and the solid content of the dispersion is 20-40 wt%.

In a further embodiment, the dispersion further comprises monoglyceride. Hereby, the anti-fogging and/or anti-static performance of the dispersion is enhanced.

In a still further embodiment, the concentration of said monoglyceride is 1-50 wt% of the total solid content. Alternatively, the concentration of said monoglyceride is 5-45 wt%, such as 10-40 wt%, like 15-35 wt%. In a further embodiment the concentration of said monoglyceride is 20-30 wt%, such as 23-27 wt%.

In a further embodiment, the dispersion is an aqueous dispersion. Hereby, is obtained that the dispersion easily can be used in food-related products. In still a further embodiment, the dispersion comprises other non-volatile solvents, such as polyglycerol polyricinoleate (PGPR).

Polyglycerol esters typically form highly viscous solutions when dispersed in water. Furthermore, a relatively unstable dispersion is formed in water when the dispersion has a high solid content - typically above 10 wt%. However, adding the surfactant to the aqueous dispersion prevents both the stability and viscosity issues.

By aqueous dispersion is to be understood a dispersion where the continuous phase of the dispersion comprises at least 75% water. In a further embodiment, the continuous phase comprises at least 80% water, preferably at least 85% water, such as at least 90% water. In a still further embodiment, the continuous phase comprises at least 95% water such as 98% water. In an even further embodiment, the continuous phase only comprises water.

In a further embodiment, the dispersion is a solvent-free dispersion. Hereby is to be understood that the dispersion is substantially free of alcohols. Thus only a minor amount of alcohol is present in the dispersion if at all. This is advantageous since it would result in a low emission and low evaporation of alcohol during use of the dispersion in production of the coated material.

In a further embodiment, the number of glycerol units in said polyglycerol is at least two. Hereby, it is to be understood that the number of glycerol units condensed to form the polyglycerol is at least two. Thus, two glycerol units can be condensed to form the polyglycerol, three glycerol units can be condensed to form the polyglycerol, four glycerol units can be condensed to form the polyglycerol, five glycerol units can be condensed to form the polyglycerol and so forth.

In one embodiment, the polyglycerol is a diglycerol. In a further embodiment, the polyglycerol is a triglycerol. In a still further embodiment, the polyglycerol is a tetraglycerol.

In one embodiment, the polyglycerol is a mixture of different polyglycerols. Hence, the dispersion may comprise for example a mixture of diglycerols and triglycerols; diglycerols and tetraglycerols; diglycerols, triglycerols and tetraglycerols; diglycerols and hexaglycerols and so forth.

Furthermore, it is to be understood that polyglycerol is to be interpreted as a polyglycerol having x glycerol units also comprising smaller amounts of e.g. (x-1), (x-2), (x+1) and (x+2) glycerol units. X is to be understood as the number of glycerol units condensed.

In a further embodiment, the polyglycerol esters are made of fatty acids being C2-C24. These fatty acids are all approved for consumption and are thus all edible fatty acid which can be used for coatings in relation with foods and foodstuffs.

The fatty acids can be both saturated and unsaturated fatty acids such as but not limited to propionic acid, butyric acid, valeric acid, caproic acid, enathic acid, caprylic acid, pelargonic acid, capric acid, undecylic acid, luric acid, tridecylic acid myristic acid, pentadecylic acid, palmitic acid, margaric acid, staric acid, nonadecylic acid, arachidic acid, heneicosylic acid, behenic acid, tricosylic acid, lignoceric acid, α-linolenic acid, stearidonic acid, eicosapentaenoic acid, docosahexaenoic acid, linoleic acid, γ-linolenic acid, dihomo-γ-linolenic acid, arachidonic acid, docosatetraenoic acid, palmitoleic acid, vaccenic acid, paullinic acid, oleic acid, elaidic acid, gondoic acid, erucic acid, nervonic acid, mead acid.

In a further embodiment, the dispersion further comprises a co-surfactant. In a still further embodiment, the co-surfactant is an alcohol. In a still further embodiment, the co-surfactant is isopropanol or ethanol.

Adding a co-surfactant to the dispersion enables the properties of the dispersion to be further improved with regard to stability and viscosity of the dispersion.

Other co-surfactants could be polysorbates, polyoxyethylene glycol alkyl ethers, ionic surfactants, non-ionic surfactants and amphiphilic polymers.

In a further embodiment, the concentration of said co-surfactant is below 50 wt%. In a still further embodiment, the concentration of said co-surfactant is 0.1-20 wt%. Alternatively, the concentration of said co-surfactant is 0.5-18 wt% such as 1-15 wt%, like 5-10 wt%. It is to be understood that wt% is the wt% of the dispersion as such. In a further embodiment, the hydroxyl value of said polyglycerides of said dispersion is above 200. In a still further embodiment, the hydroxyl value of said polyglycerides is between 200 and 500.

The hydroxyl value is related to the number of hydroxyl-groups in the polyglycerides and can be measured by the JECFA method, based on AOCS Method Cd 13-60. The number of free hydroxyl-groups is important for the anti-static and anti-fogging characteristics of the dispersion since the coating hereby becomes hydrophilic and enables a uniformly spreading of water on the surface.

In a further embodiment, the dispersion further comprises an additive being an antioxidant, a biocide and/or a rheological modifier. Hereby, the physical, chemical and biological stability as well as the shelf-life and handling of the dispersion are improved. Examples of additives could be antioxidants such as ascorbyl palmitate and tocopherols, biocides such as mirenate and nisaplin and rheological modifiers such as xanthan gum and gellan gum.

This invention further describes a coating composition for coating a polymer surface comprising a dispersion as described herein.

The coating composition is formed from the dispersion by dilution. This dilution is preferably performed by diluting with water. After the dilution, the coating composition will as the dispersion, be stable and therefore prevent separation and sedimentation for multiple weeks.

It is to be understood that the dispersion as such can be used directly for coating a polymer surface. However, typically the dispersion will be highly concentrated with regard to the total solid content in order for easier transportation and storage. Therefore, the dispersion will be diluted into a coating composition where the total solid content is less than that of the dispersion enabling more uniform distribution of the solid content on the polymer surface.

In one embodiment, the coating composition has a solid content below 10 wt%. In a further embodiment, the coating composition has a solid content below 5 wt%. Hereby is to be understood that wt% is meant as the wt% of the coating composition as such.

This invention further describes the use of the coating composition as described herein as an anti-fogging coating. Hereby is to be understood that a coating composition obtained by diluting the dispersion can be added to a surface as a coating and that this coating due to the characteristics of the components of the dispersion or coating composition will be able to prevent fog from forming at the surface. The fog can be formed either by cold or hot conditions.

In one embodiment, the dispersions used for anti-fogging coating compositions comprise fatty acid esters from fatty acids with chain lengths of C₁₄ or higher, for instance myristic, palmitic, stearic, oleic, ricinoleic, dihydroxystearic, or behenic acid.

This invention further describes the use of said coating composition as described herein as an anti-static coating. Hereby is to be understood that the coating composition obtained by diluting the dispersion can be added to a surface as a coating and that this coating due to the characteristics of the components of the dispersion or coating composition will be able to provide the surface with an anti-static effect.

In one embodiment, the dispersions used for anti-static coating composition comprise fatty acid esters from fatty acids with chain lengths of C₁₂ or below, for instance lauric, capric, caprylic, or caproic acid.

This invention further describes a polymer surface comprising a coating formed by a coating composition as described herein.

The coating compositions can be applied by various coating technologies, like inline coating, spray coating, gravure coating, roll-to-roll coating, dip coating and other methods known to the person skilled in the art.

In one embodiment, the coating has a solid content per surface area of 5-500 mg/m².

In a further embodiment, the coating has a solid content per surface area of 5-50 mg/m². In a still further embodiment, the coating has a solid content per surface area of 10-20 mg/m². These concentrations are particularly advantageous when the coating is used as an anti-static coating.

In a further embodiment, the coating has a solid content per surface area of 50-500 mg/m². In a still further embodiment, the coating has a solid content per surface area of 50-200 mg/m². These concentrations are particularly advantageous when the coating is used as an anti-fogging coating.

In a further embodiment, the polymer is a polyester. In a still further embodiment, the polyester is polyethylene terephthalate (PET).

Alternatively, the polymer can be other polymer types such as polystyrenes, polyolefins or polyvinyl chloride (PVC). Additionally, the polymer may be a biodegradable polymer and/or a foamed polymer.

This invention further describes a use of a polymer surface as described herein for packaging materials. By packaging material is to be understood besides general food packaging for example flexible pouches, peelable seals, lids and barrier films.

In a further aspect, the packaging material is used for IT components.

Additionally, the coating can be used for industrial applications such as hot stamping foil, photo-resist films, metallic yarns, adhesive tapes, plastic cards, labels and liners, lamination films, brightness enhancement films, solar and safety window films, medical applications, vacuum insulation panels and films for transfer printing; thermal transfer ribbons such as bar code printers, fax printers, portable printers, ticketing machines, monochrome ribbons and colour ribbons; imaging film such as digital imaging, overhead transparencies, printing and pre-press films, colour proofing, printing plates and wide-format displays; and photovoltaic films

The coating can also be used in connection with electrical applications such as transformer insulation films, membrane touch switches, computer and calculator keyboards, flexible printed circuit films, and flat cables.

In one aspect, the packaging material is a food packaging material.

Glycerides and polyglycerides are popular for sensitive applications owing to their sustainable and product safety profile in addition to efficient anti-fog and anti-stat functionality.

The packaging includes foods like for example frozen foods and fresh foods.

Besides food packaging, the coating can be used for other sensitive applications such as medical applications like containers and medical packaging due to the sustainability of the products i.e. renewability, product safety and health e.g. to replace additives of concern like amines.

In a further aspect, the packaging material is a bottle. This could be a bottle for food in the form of beverages. Alternatively, it could be a bottle for keeping other types of food i.e. for example oils, and dressing.

### BRIEF DESCRIPTION OF THE DRAWINGS

- Figure 1: illustrates three different performance ratings for testing of anti-fogging on PET surfaces;
- Figure 2: illustrates the anti-fogging performance of three different coatings on PET surfaces compared to a surface without coating;
- Figure 3: illustrates anti-static coatings on PET where static decay times are measured 14 days after coating of the PET films;
- Figure 4: illustrates viscosity curves for samples ASD15, AFM15, LV42, and LV43.

### EXAMPLES

### Material and methods

### Preparation of coating dispersions

The aqueous additive dispersions were prepared by heating water in a 2I round bottom flask to 70°C. At this temperature glycerides, polyglycerides and neutralized fatty acid esters were added to the water under stirring with an anchor stirrer at 500rpm. After one minute of stirring at 70°C the dispersions were cooled in a water bath to 25°C. The stirring was continued during cooling. In this way translucent to white aqueous dispersions were obtained.

### Preparation of anti-fogging PET films

Aqueous polyglyceride dispersions were diluted with water to a concentration of 0.75 wt%. The translucent coating compositions were applied directly to APET films with a thickness of 60 µm by spray coating. The solid content per surface area on the film after air drying at 25°C was 150 mg/m², 200 mg/m² or 250 mg/m².

### Test method for anti-fogging performance

The anti-fog properties were measured under cold and hot fog conditions.

A 250 ml glass beaker was filled one third with water at 20°C. The beaker was covered with the spray-coated test film. For cold fog testing the beakers were placed in the refrigerator at 5°C. For hot fog testing they were placed in a water bath at 60°C. The condensation of water on the film was observed and rated at regular intervals over a three hour test period.

The anti-fogging properties were categorized from A-E, with A and B referring to no or just a small anti-fogging effect (macroscopic water droplets are forming, turbid films), C refers to a medium performance (slightly turbid films) and D and E referring to a good and very good anti-fogging performance (a microscopic water film is forming, enabling full transparency).

### Anti-fogging coatings on PET film

Examples of anti-fogging coating compositions tested:

**Table 1**

| **Sample name** | **Coating composition*** |
|---|---|
| Reference 1 | No coating |
| Reference 2 | 100 wt% Ethoxylated sorbitan ester (PEO(20)-sorbitan monooleate) |
| ACS 35 | 95 wt% GRINDSTED® PGE 308 |
| | 5 wt% sodium stearate |
| ACS 41 | 95 wt% Tetraglycerol monocaprate |
| | 5 wt% sodium stearate |
| ACS 70 | 95 wt% GRINDSTED® PGE 909 |
| | 5 wt% sodium stearate |
| ACS 73 | 95 wt% Tetraglycerol monomyristate |
| | 5 wt% sodium stearate |
| ACS 79 | 95 wt% Triglycerol monocaprate |
| | 5 wt% sodium stearate |
| AFM 15 | 73 wt% GRINDSTED® PGE 909 |
| | 15 wt% DIMODAN® HP |
| | 12 wt% sodium stearoyl lactylate |

| | |
|---|---|
| *The coating composition is presented in terms of the total solid content. | |

GRINDSTED® PGE 308 is a polyglycerol ester in which the polyglycerol moiety is mainly mono-, di-, tri-, and tetraglycerol.

GRINDSTED® PGE 909 is a polyglycerol ester in which the polyglycerol moiety is mainly mono-, di-, tri-, and tetraglycerol.

DIMODAN® HP is a destilled monoglyceride made from edible, fully hydrogenated palm based oil.

All coating compositions were sprayed on PET films and dried. For the samples in Table 1, the solid content per surface area after drying was 200 mg/m².

### Preparation of anti-static PET films

The aqueous polyglyceride dispersions were diluted with water to a concentration of 0.075 or 0.08 wt%. The translucent coating compositions were applied directly to APET films with a thickness of 60 µm by spray coating. The solid content per surface area on the film after air drying at 25°C was 10 mg/m², 15 mg/m² or 25 mg/m².

The coated film samples were stored for 14 days at a humidity of 50%.

### Static decay time measurements

Before the measurement, the coated films were conditioned for 24h at 25°C at a relative humidity (RH) of 50%. The static decay time (STD) of the samples was measured using an Electrotech Systems Static Decay meter, model 406C, equipped with a humidity chamber. The humidity chamber ensured proper conditioning of samples prior to testing. A voltage of 5 kV was applied to the sample. When the sample surface had reached full charge at 5 kV, the power supply was cut off. The time, measured in seconds, for the accepted charge to dissipate to 10% of its original value (500V) was recorded as the SDT.

The data was compared to a reference film coated with ethoxylated sorbitan ester (PCD 2) at same solid content per surface area (10 mg/m²).

### Anti-static coatings

Examples of anti-static coating compositions tested:

**Table 2**

| **Sample name** | **Coating composition*** |
|---|---|
| PCD 1 | No coating |
| PCD 2 | 100% Ethoxylated sorbitan ester (PEO(20)-sorbitan monooleate) |
| PCD 3 | 95% Diglycerol monocaprylate |
| | 5 wt% sodium stearate |
| PCD 4 | 95% Triglycerol monocaprate |
| | 5 wt% sodium stearate |
| PCD 6 | 95% GRINDSTED® PGE 308 |
| | 5 wt% sodium stearate |
| ASD 15 | 94% GRINDSTED® PGE 308 |
| | 6 wt% sodium stearoyl lactylate |

| | |
|---|---|
| *The coating composition is presented in terms of the total solid content. | |

### Measurement of viscosity

The viscosity of the dispersions was measured at 20°C on a Physica MCR301 from Anton Paar (Germany), using bob-cup system CC27. Shear flow viscosity measurements were carried out where the shear rate was first ramped from low to high shear, and then lowered again over the range of 0.01/s - 300/s. The waiting time for equilibration of the samples before starting the measurements was 5 min and the measurement time 10 min.

### LV 42 and LV 43 for anti-static and anti-fogging coatings

The LV 42 and LV 43 dispersions comprise compositions and solid contents as described in Table 3.

**Table 3**

| **Sample name** | **Composition** | **Solid content in the dispersion** |
|---|---|---|
| LV 42 | 90% GRINDSTED® PGE 308 | 25% |
| | 9.7% PGPR | |
| | 0.3% Sodium stearate lactylate | |
| LV 43 | 90% GRINDSTED® PGE 308 | 30% |
| | 9.85% PGPR | |
| | 0.15% Sodium stearate lactylate | |

| | | |
|---|---|---|
| The composition is diluted in water to form the dispersion. | | |

Coating compositions were prepared by dilution of the dispersions LV 42 and LV 43 in water. Table 4 illustrates the coating compositions prepared and the solid contents hereof.

**Table 4**

| **Sample name** | **Solid content in the coating composition** |
|---|---|
| LV 42-1 | 0.08% |
| LV 42-2 | 0.75% |
| LV 43-1 | 0.08% |
| LV 43-2 | 0.75% |

The coating compositions LV 42-1, LV 42-2, LV 43-1 and LV 43-2 were applied to APET films as described above. The solid content per surface area for the obtained coated polymer film samples is described in Table 5.

**Table 5**

| **Sample name** | **Coating composition** | **Solid content per surface area** |
|---|---|---|
| LAC 1 | LV 42-1 | 15 mg/m² |
| LAC 2 | LV 42-1 | 25 mg/m² |
| LAC 3 | LV 42-2 | 150 mg/m² |
| LAC 4 | LV 42-2 | 250 mg/m² |
| LAC 5 | LV 43-1 | 15 mg/m² |
| LAC 6 | LV 43-1 | 25 mg/m² |
| LAC 7 | LV 43-2 | 150 mg/m² |
| LAC 8 | LV 43-2 | 250 mg/m² |

### II. Results

### Anti-fogging coatings on PET film

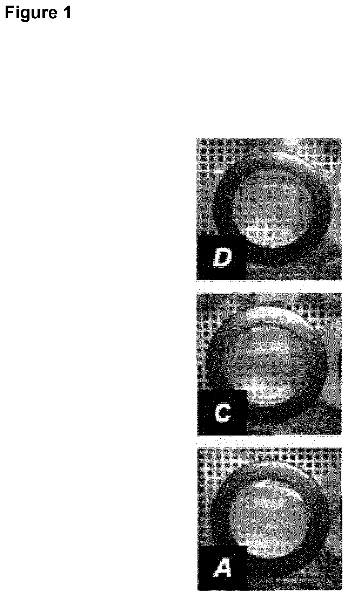

Figure 1 illustrates examples of the performance ratings A, C and D where the performance was measured at 5°C (cold fog) 7 days after coating of the PET film.

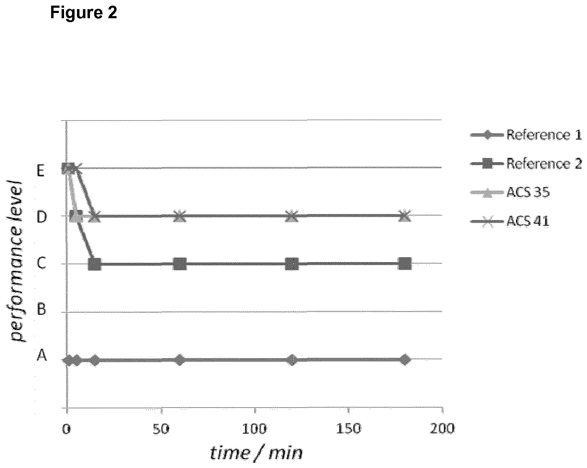

Figure 2 illustrates the rating of the anti-fogging coatings over time for some of the compositions. After 2 weeks storage at 25°C the anti-fogging properties were measured in a standard test procedure over 3h at 4°C.

The results confirm good and very good anti-fogging performance for the glyceride and polyglyceride dispersions, even exceeding the anti-fogging performance of Reference 2 (ethoxylated sorbitan ester).

Further results are shown in Table 6, where samples were tested for cold fog performance. These results illustrate that the anti-fogging properties of the coatings were maintained even several days after the production of the coating on the surface of the PET polymer. The solid content per surface area on the film after air drying at 25°C was 200 mg/m².

**Table 6**

| **Sample** | **Days after production** | **Time in minutes** | | | | | |
|---|---|---|---|---|---|---|---|
| | | **1** | **5** | **15** | **60** | **120** | **180** |
| Reference 1 | 7 | A | A | A | A | A | A |
| Reference 2 | 7 | E | D | C | C | C | C |
| | 71 | D | C | C | C | A | A |
| ACS 35 | 7 | E | D | D | D | D | D |
| | 64 | E | D | D | D | D | D |
| ACS 41 | 7 | E | E | D | D | D | D |
| | 64 | E | E | D | D | D | D |
| ACS 70 | 3 | E | E | D | D | D | E |
| | 31 | E | E | E | E | E | E |
| ACS 79 | 3 | E | D | D | D | D | D |
| | 14 | E | D | D | D | D | D |
| AFM 15 | 14 | E | E | D | C | D | D |
| | 30 | E | D | C | C | D | D |

Table 7 illustrates the anti-fogging performance of coatings under hot fog conditions. These results show good anti-fogging performance also for hot fog even after several days after production. The solid content per surface area on the film after air drying at 25°C was 200 mg/m².

**Table 7**

| **Sample** | **Days after production** | **Time in minutes** | | | | | |
|---|---|---|---|---|---|---|---|
| | | **1** | **5** | **15** | **60** | **120** | **180** |
| Reference 1 | 7 | A | A | A | A | A | A |
| Reference 2 | 7 | C | C | B | B | B | B |
| | 71 | C | C | C | B | B | B |
| ACS 70 | 14 | E | D | D | A | B | B |
| | 31 | E | E | E | E | D | C |
| ACS 73 | 3 | E | C | D | B | B | B |
| | 14 | E | C | C | B | B | B |
| AFM 15 | 14 | E | C | D | C | C | C |
| | 30 | E | D | D | B | B | B |

Table 8 illustrates the anti-fogging performance of coatings under cold fog conditions. In comparison to the non-coated sample (reference), very good (D) to excellent (E) antifogging performances were observed. The solid content per surface area on the film after air drying at 25°C was 150 mg/m², respectively 250 mg/m² (see Table 5).

**Table 8**

| **Sample** | **Days after production** | **Time in minutes** | | | | | |
|---|---|---|---|---|---|---|---|
| | | **1** | **5** | **15** | **60** | **120** | **180** |
| Reference 1 | 4 | A | A | A | A | A | A |
| | 10 | A | A | A | A | A | A |
| LAC 3 | 4 | E | E | D | D | D | D |
| | 10 | E | E | D | D | D | D |
| LAC 4 | 4 | E | E | E | D | E | E |
| | 10 | E | E | E | E | E | E |
| LAC 7 | 4 | E | E | D | D | D | D |
| | 10 | E | E | D | D | D | D |
| LAC 8 | 4 | E | E | E | E | E | D |
| | 10 | E | E | E | E | E | E |

Table 9 illustrates the anti-fogging performance of coatings under hot fog conditions. The solid content per surface area on the film after air drying at 25°C was 150 mg/m², respectively 250 mg/m² (see Table 5). Over short exposure times up to 15min excellent (E) or very good (D) antifogging performance was obtained. Overall the antifogging effect under hot fog conditions was not as long lasting than under cold fog conditions.

**Table 9**

| **Sample** | **Days after production** | **Time in minutes** | | | | | |
|---|---|---|---|---|---|---|---|
| | | **1** | **5** | **15** | **60** | **120** | **180** |
| Reference 1 | 4 | A | A | A | B | B | B |
| | 10 | A | A | A | B | B | B |
| LAC 3 | 4 | E | D | D | B | B | B |
| | 10 | E | D | D | B | B | B |
| LAC 4 | 4 | E | D | D | B | B | B |
| | 10 | E | D | C | B | B | B |
| LAC 7 | 4 | E | C | C | B | B | B |
| | 10 | E | D | D | B | B | B |
| LAC 8 | 4 | E | D | D | B | B | B |
| | 10 | E | E | C | B | B | B |

### Anti-static coatings on PET-film (I)

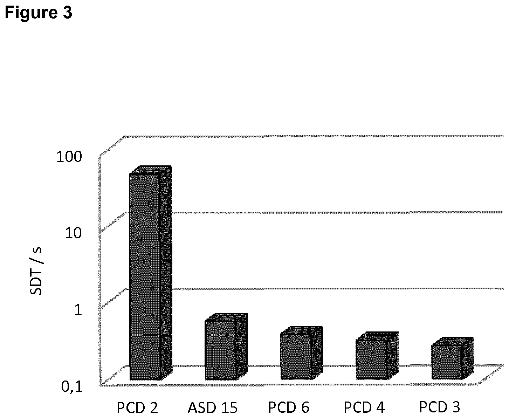

Figure 3 illustrates the performance of anti-static coatings on PET, where the static decay times were measured 14 days after coating of the PET films. Good anti-stat performance was generally obtained with SDT readings below 2 seconds.

These data are furthermore summarized in Table 10 showing the results of anti-static performance for coatings having a solid content per surface area of 10 mg/m², where the measurements were performed 14 days after the coatings were applied. The coating composition was applied with a solid content of 0.075 wt%.

**Table 10**

| **Sample name** | **Static decay time (SDT) / s** |
|---|---|
| PCD 1 | > 60 |
| PCD 2 | 48 |
| PCD 3 | 0.27 |
| PCD 4 | 0.32 |
| PCD 6 | 0.38 |
| ASD 15 | 0.57 |

### Anti-static coatings on PET-film (II)

The static decay times were measured 4 and 10 days after coating of the PET films. Good anti-stat performance was generally obtained with SDT readings below 2 seconds.

The data are summarized in Table 11 showing the results of anti-static performance for coatings having a solid content per surface area of 15 mg/m², respectively 25 mg/m² (see Table 5), where the measurements were performed 4 days and 10 days after the coatings were applied. The coating compositions were applied with a solid content of 0.08 wt%.

**Table 11**

| **Sample name** | **Static decay time (SDT) / s** | |
|---|---|---|
| | 4 days | 10 days |
| PCD 1 | > 60 | > 60 |
| LAC 1 | 0.62 | 0.43 |
| LAC 2 | 0.51 | 0.34 |
| LAC 5 | 0.99 | 0.53 |
| LAC 6 | 0.83 | 0.42 |

The data confirm excellent antistatic properties of the films coated with polyglycerides and monoglycerides with static decay times well below 1s. The best performance is observed with triglycerol caprate (TGC10, STD < 0.3s) and diglycerol caprylate (DGC8, STD < 1s). Also a blend of polyglycerides with monoglycerides (GRINDSTED® PGE 308) enables a very good antistatic performance (STD < 1s).

### Viscosity

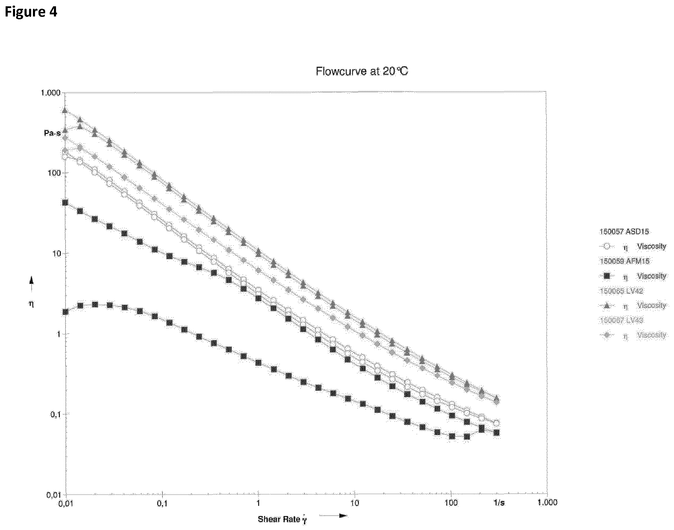

The following four samples were measured in duplicates: ASD15, AFM15, LV42, LV43. Shear flow viscosity curves of the four dispersions are illustrated in Figure 4. During increase or lowering of the shear rate the dispersions show a shear thinning effect. Typical viscosities at a shear rate of 10/s are in the range of 0.1-10 Pa s.

### SUMMARY PARAGRAPHS

The present invention will now be described by way of numbered paragraphs.
1. A dispersion for coating a polymer surface comprising polyglycerol esters and a surfactant being a neutralized or partially neutralised fatty acid or a neutralized or partially neutralized ester of fatty acids.
2. The dispersion according to paragraph 1, wherein the concentration of said polyglycerol esters is above 10 wt% of the total solid content.
3. The dispersion according to paragraph 2, wherein the concentration of said polyglycerol esters is between 10-60 wt% of the total solid content.
4. The dispersion according to any of the paragraphs 2-3, wherein the concentration of said polyglycerol esters is between 10-30 wt% of the total solid content.
5. The dispersion according to any of the preceding paragraphs, wherein said fatty acids of said surfactant is one or more of lactic acid, citric acid, stearic acid, tartaric acid or a mixture of one or more hereof.
6. The dispersion according to any of the paragraphs 1-4, wherein said surfactant is sodium stearoyl lactylate (SSL).
7. The dispersion according to any of the preceding paragraphs, wherein the dispersion further comprises monoglyceride.
8. The dispersion according to paragraph 7, wherein the concentration of said monoglyceride is 1-50 wt% of the total solid content.
9. The dispersion according to any of the preceding paragraphs, wherein said dispersion is an aqueous dispersion.
10.The dispersion according to any of the preceding paragraphs, wherein the number of glycerol units in said polyglycerol is at least two.
11.The dispersion according to any of the preceding paragraphs, wherein said polyglycerol esters are made of fatty acids being C2-C24.
12.The dispersion according to any of the preceding paragraphs, wherein the concentration of said surfactant is 0.1-50 wt% of the total solid content.
13.The dispersion according to paragraph 12, wherein the concentration of said surfactant is 1-10 wt%.
14. The dispersion according to any of the preceding paragraphs, wherein said dispersion further comprises a co-surfactant.
15.The dispersion according to paragraph 13, wherein said co-surfactant is an alcohol.
16.The dispersion according to paragraph 14, wherein said co-surfactant is isopropanol or ethanol.
17.The dispersion according to any of the paragraphs 14-16, wherein the concentration of said co-surfactant is below 50 wt%.
18. The dispersion according to paragraph 17, wherein the concentration of said co-surfactant is 0.1-20 wt%.
19. The dispersion according to any of the preceding paragraphs, wherein the hydroxyl value of said polyglycerides of said dispersion is above 200.
20.The dispersion according to paragraph 17, wherein the hydroxyl value of said polyglycerides is between 200-500.
21.The dispersion according to any of the preceding paragraphs, wherein said dispersion further comprises an additive being an antioxidant, a biocide and/or a rheological modifier.
22.A coating composition for coating a polymer surface comprising a dispersion as described in any of the paragraphs 1-21.
23.The coating composition according to paragraph 22, wherein said coating has a solid content below 10 wt%.
24.The coating composition according to paragraph 22, wherein said coating has a solid content below 5 wt%.
25. The use of said coating composition as described in any of the paragraphs 22-24 as an anti-fogging coating.
26. The use of said coating composition as described in any of the paragraphs 22-24 as an anti-static coating.
27.A polymer surface comprising a coating formed by a coating composition as described in any of the paragraphs 22-24.
28.The polymer surface according to paragraph 27, wherein said coating has a solid content per surface area of 5-500 mg/m².
29.The polymer surface according to paragraph 28, wherein said coating has a solid content per surface area of 5-50 mg/m².
30.The polymer surface according to paragraph 29, wherein said coating has a solid content per surface area of 10-20 mg/m².
31.The polymer surface according to paragraph 28, wherein said coating has a solid content per surface area of 50-500 mg/m².
32.The polymer surface according to paragraph 31, wherein said coating has a solid content per surface area of 50-200 mg/m².
33.The polymer surface according to any of the paragraphs 27-32, wherein said polymer is a polyester.
34.The polymer surface according to paragraph 33, wherein said polyester is polyethylene terephthalate (PET).
35.A use of a polymer surface as described in any of the paragraphs 27-34 for packaging materials.
36.The use of a polymer surface according to paragraph 35, wherein said packaging material is a food packaging material.
37.The use of a polymer surface according to any of the paragraphs 35-36, wherein said packaging material is a bottle.

## Claims

1. A dispersion for coating a polymer surface comprising polyglycerol esters and a surfactant being a neutralized or partially neutralised fatty acid or a neutralized or partially neutralized ester of fatty acids.

2. The dispersion according to claim 1, **characterized in that**, the solid content of said dispersion is 10-70 wt%, preferably 20-60 wt%, preferably 20-50 wt%, preferably 20-40 wt%.

3. The dispersion according to any of the claims 1 or 2, **characterized in that**, the viscosity of said dispersion at a temperature of 20°C and a shear rate of 10/s is 0.01-100 Pa s, preferably 0.1-10 Pa s.

4. The dispersion according to any of the preceding claims, **characterized in that**, the concentration of said polyglycerol esters is above 10 wt% of the total solid content.

5. The dispersion according to any of the claims 1-4, **characterized in that**, said surfactant is sodium stearoyl lactylate (SSL).

6. The dispersion according to any of the preceding claims, **characterized in that**, the dispersion further comprises monoglyceride.

7. The dispersion according to claim 6, **characterized in that**, the concentration of said monoglyceride is 1-50 wt% of the total solid content.

8. The dispersion according to any of the preceding claims, **characterized in that**, the concentration of said surfactant is 0.1-50 wt% of the total solid content, preferably 1-10 wt%.

9. The dispersion according to any of the preceding claims, **characterized in that**, said dispersion further comprises a co-surfactant.

10. A coating composition for coating a polymer surface comprising the dispersion according to any of the claims 1-9.

11. The use of the coating composition according to claim 10 as an anti-fogging coating.

12. The use of the coating composition according to claim 10 as an anti-static coating.

13. A polymer surface comprising the coating composition according to claim 10.

14. The polymer surface according to claim 13, **characterized in that**, said polymer is a polyethylene terephthalate (PET).

15. A use of a polymer surface according to any of the claims 13-14 for packaging materials.

## Patentansprüche

1. Dispersion zum Beschichten einer Polymeroberfläche, umfassend Polyglycerolester und ein Tensid, das eine neutralisierte oder teilweise neutralisierte Fettsäure oder ein neutralisierter oder teilweise neutralisierter Ester von Fettsäuren ist.

2. Dispersion gemäß Anspruch 1, **dadurch gekennzeichnet, dass** der Feststoffgehalt der Dispersion 10-70 Gew.-% beträgt, vorzugsweise 20-60 Gew.-%, vorzugsweise 20-50 Gew.-%, vorzugsweise 20-40 Gew.-%.

3. Dispersion gemäß einem der Ansprüche 1 oder 2, **dadurch gekennzeichnet, dass** die Viskosität der Dispersion bei einer Temperatur von 20 °C und einer Scherrate von 10/s 0,01-100 Pa.s beträgt, vorzugsweise 0,1-10 Pa.s.

4. Dispersion gemäß einem der vorstehenden Ansprüche, **dadurch gekennzeichnet, dass** die Konzentration der Polyglycerolester über 10 Gew.-% des Gesamtfeststoffgehalts beträgt.

5. Dispersion gemäß einem der Ansprüche 1-4, **dadurch gekennzeichnet, dass** das Tensid Natriumstearoyllactylat (SSL) ist.

6. Dispersion gemäß einem der vorstehenden Ansprüche, **dadurch gekennzeichnet, dass** die Dispersion ferner Monoglycerid umfasst.

7. Dispersion gemäß Anspruch 6, **dadurch gekennzeichnet, dass** die Konzentration des Monoglycerids 1-50 Gew.-% des Gesamtfeststoffgehalts beträgt.

8. Dispersion gemäß einem der vorstehenden Ansprüche, **dadurch gekennzeichnet, dass** die Konzentration des Tensids 0,1-50 Gew.-% des Gesamtfeststoffgehalts beträgt, vorzugsweise 1-10 Gew.-%.

9. Dispersion gemäß einem der vorstehenden Ansprüche, **dadurch gekennzeichnet, dass** die Dispersion ferner ein Cotensid umfasst.

10. Beschichtungszusammensetzung zum Beschichten einer Polymeroberfläche, umfassend die Dispersion gemäß einem der Ansprüche 1-9.

11. Verwendung der Beschichtungszusammensetzung gemäß Anspruch 10 als Antibeschlagbeschichtung.

12. Verwendung der Beschichtungszusammensetzung gemäß Anspruch 10 als antistatische Beschichtung.

13. Polymeroberfläche, umfassend die Beschichtungszusammensetzung gemäß Anspruch 10.

14. Polymeroberfläche gemäß Anspruch 13, **dadurch gekennzeichnet, dass** das Polymer ein Polyethylenterephthalat (PET) ist.

15. Verwendung einer Polymeroberfläche gemäß einem der Ansprüche 13-14 für Verpackungsmaterialien.

## Revendications

1. Dispersion pour le revêtement d'une surface de polymère comprenant des esters de polyglycérol et un tensioactif qui est un acide gras neutralisé ou partiellement neutralisé ou un ester neutralisé ou partiellement neutralisé d'acides gras.

2. Dispersion selon la revendication 1, **caractérisée en ce que** la teneur en matières solides de ladite dispersion est de 10-70 % en poids, de préférence 20-60 % en poids, de préférence 20-50 % en poids, de préférence 20-40 % en poids.

3. Dispersion selon l'une quelconque des revendications 1 ou 2, **caractérisée en ce que** la viscosité de ladite dispersion à une température de 20 °C et un taux de cisaillement de 10 s⁻¹ est de 0,01-100 Pa.s, de préférence 0,1-10 Pa.s.

4. Dispersion selon l'une quelconque des revendications précédentes, **caractérisée en ce que** la concentration desdits esters de polyglycérol est au-dessus de 10 % en poids de la teneur en matières solides totales.

5. Dispersion selon l'une quelconque des revendications 1-4, **caractérisée en ce que** ledit tensioactif est le stéaroyllactylate de sodium (SSL).

6. Dispersion selon l'une quelconque des revendications précédentes, **caractérisée en ce que** la dispersion comprend en outre un monoglycéride.

7. Dispersion selon la revendication 6, **caractérisée en ce que** la concentration dudit monoglycéride est de 1-50 % en poids de la teneur en matières solides totales.

8. Dispersion selon l'une quelconque des revendications précédentes, **caractérisée en ce que** la concentration dudit tensioactif est de 0,1-50 % en poids de la teneur en matières solides totales, de préférence 1-10 % en poids.

9. Dispersion selon l'une quelconque des revendications précédentes, **caractérisée en ce que** ladite dispersion comprend en outre un co-tensioactif.

10. Composition de revêtement pour le revêtement d'une surface de polymère comprenant la dispersion selon l'une quelconque des revendications 1-9.

11. Utilisation de la composition de revêtement selon la revendication 10 en tant que revêtement antibuée.

12. Utilisation de la composition de revêtement selon la revendication 10 en tant que revêtement antistatique.

13. Surface de polymère comprenant la composition de revêtement selon la revendication 10.

14. Surface de polymère selon la revendication 13, **caractérisée en ce que** ledit polymère est un poly(téréphtalate d'éthylène) (PET).

15. Utilisation d'une surface de polymère selon l'une quelconque des revendications 13-14 pour des matériaux d'emballage.
